# EUROPÄISCHE PATENTANMELDUNG

(11) **EP 1 130 066 A1**
(43) Veröffentlichungstag der Anmeldung: **05.09.2001**
(21) Anmeldenummer: 01100852.1
(22) Anmeldetag: 16.01.2001
(51) Int. Cl.: C09D 4/00, B32B 15/08

(54) **Verfahren zur Herstellung eines extrusionsbeschichteten Metallgegenstands**

(30) Priorität: 04.03.2000 DE 10010669
(71) Anmelder: Degussa AG, 40474 Düsseldorf (DE)
(72) Erfinder: Hellermann, Walter, Dr., 46282 Dorsten (DE); Gahlmann, Klaus, 45770 Marl (DE)

(57) **Zusammenfassung**

Ein extrusionsbeschichteter Metallgegenstand wird hergestellt durch
- Auftragen einer Mischung, die eine Organosilanzusammensetzung enthält und
- Beschichten der so behandelten und getrockneten Oberfläche mit der extrudierten Schmelze einer Polyamidformmasse.

Der beschichtete Gegenstand kann beispielsweise als Rohrleitung in einem Automobil eingesetzt werden.

## Beschreibung

Gegenstand der Erfindung sind ein Verfahren zur Herstellung eines Metallgegenstands, dessen Oberfläche mit einer Silanzusammensetzung vorbehandelt und dann mit einer Polyamidformmasse extrusionsbeschichtet wurde, sowie entsprechend extrusionsbeschichtete Metallprofile.

Metallgegenstände, die für Anwendungen bestimmt sind, bei denen sie korrosionsfördernden Umwelteinflüssen ausgesetzt sind, können mit einer Polyamidformmasse extrusionsbeschichtet werden. Hierdurch wird nicht nur der Zutritt des korrosionsfördernden Agens zur Metalloberfläche versperrt, sondern auch ein gewisser mechanischer Schutz der Oberfläche beispielsweise gegen Beanspruchungen wie Friktion, Schlag oder Stoss bewirkt. Dieser Schutz ist vor allem dann wünschenswert, wenn die Oberfläche vor der Beschichtung zusätzlich eine Korrosionsschutzbehandlung erfahren hat. Unabdingbare Voraussetzung ist hierbei, dass die durch Extrusion aufgebrachte Beschichtung fest haftet, damit bei mechanischer Beschädigung das korrosionsfördernde Agens, beispielsweise Wasser oder wässrige Salzlösung, die Beschichtung nicht unterwandert.

Wenn der Metallgegenstand beispielsweise aus Aluminium oder einer Aluminiumlegierung besteht, wird er bisher durch Chromatierung vorbehandelt. Mit der Chromatierung wird nicht nur die Haftung der aufgebrachten Polyamidformmasse verbessert, die Chromatierungsschicht bewirkt auch selbst bereits eine Verbesserung der Korrosionsbeständigkeit. Entsprechende Anwendungen in der Automobilindustrie sind beispielsweise Kraftstoffleitungen, Servolenkungsleitungen und Wasserkühlleitungen. Hierbei wird zwar eine ausreichende Verbesserung der Korrosionsbeständigkeit sowie der Haftung der Polyamidschicht erzielt; wegen der cancerogenen Wirkung der für das Chromatierungsbad verwendeten Chrom(VI)-Verbindungen wird aber von Seiten der Automobilindustrie gefordert, auf die Chromatierung zu verzichten. Es musste also ein Ersatz für die Chromatierung gefunden werden, mit dem trotzdem die Metalloberfläche ausreichend vor Korrosion geschützt wird und gleichzeitig die aufgebrachte Polyamidschicht fest auf dem Metall haftet. Darüber hinaus war es wünschenswert, mit dieser Methode auch Gegenstände, die aus anderen Metallen bestehen wie beispielsweise Stahl, Messing oder Zink, wirksam vor Korrosion zu schützen.

Aus der JP-A 9-169079 ist bekannt, dass ein Aluminiumblech mit einer Polyamidfolie fest verklebt werden kann, wenn das Aluminiumblech zuerst mit der wässrigen Lösung eines Epoxysilans behandelt und dann nach Trocknen zusammen mit einer Polyamidfolie ein Pressverbund bei einer Temperatur hergestellt wird, bei der das Polyamid geschmolzen ist. In den Beispielen wird ein Verbund mit PA 12 durch Heißverpressen innerhalb von 2 Minuten bei 240 °C hergestellt.

Diese Ergebnisse sind nicht auf die Extrusionsbeschichtung übertragbar, da hier kein nennenswerter Druck auf den Verbund ausgeübt wird und da vor allem die Kontaktzeit, während der das aufgetragene Polyamid noch geschmolzen ist und Bindungen zur Oberfläche eingehen kann, in der Größenordnung von wenigen Sekunden liegt. Somit konnte nicht erwartet werden, dass Silane auch bei der Extrusionsbeschichtung von Metallen mit Polyamid als Haftvermittler geeignet sind und hierbei der gewünschte Korrosionsschutz erzielt werden kann.

Überraschenderweise hat sich jedoch gezeigt, dass ein extrusionsbeschichteter Metallgegenstand, der die oben genannten Anforderungen erfüllt, mit Hilfe folgender Verfahrensschritte hergestellt werden kann:
1) Auftragen einer Mischung, die eine Organosilanzusammensetzung enthält, welche hergestellt ist aus
   a) Q Molen eine funktionelle Gruppe tragender Alkoxysilane der allgemeinen Formel

      A-Si(R¹)_{y}(OR*)_{3-y} I

      und
   b) M Molen Alkoxysilane, ausgewählt aus
      α) Trialkoxysilanen der allgemeinen Formel

         R²-Si(OR**)₃ II

         und/oder
      β) Dialkoxysilanen der allgemeinen Formel

         R³R⁴Si(OR***)₂ III

         und/oder
      γ) Alkoxyverbindungen der allgemeinen Formel

         Me(OR****)ₙ, IV
   wobei A einen Substituenten bedeutet, der mindestens eine direkt oder über einen aliphatischen oder aromatischen Kohlenwasserstoffrest mit Silicium verbundene Amino-, Alkylamino-, Dialkylamino-, Amido-, Epoxy-, Acryloxy-, Methacryloxy-, Cyano-, Isocyanato-, Ureido-, Thiocyanato-, Mercapto-, Sulfan- oder Halogengruppe besitzt,
   - R¹ =: Methyl, Ethyl oder A (wie vorstehend definiert),
   - y=: 0 oder 1,
   - R^{*}, R^{**}, R^{***} und R^{****}: sind unabhängig voneinander eine Alkylgruppe mit 1 bis 8 C-Atomen oder eine entsprechende Alkylgruppe, die mit einem Alkyl[(poly)ethylenglykol]Rest substituiert ist,
   - R², R³ und R⁴: sind unabhängig voneinander eine Alkyl-, Alkenyl-, Alkinyl-, Cycloalkyl-, Cycloalkenyl- oder aromatische Gruppe mit jeweils maximal 18 C-Atomen oder eine derartige Gruppe, die teil- oder perfluoriert und/oder mit Alkyloxy- und/oder mit Aryloxygruppen substituiert ist,
   Me ist ausgewählt aus Si (n gleich 4) oder einem Metall wie Ti (n gleich 4), Zr (n gleich 4), Al (n gleich 3) und Zn (n gleich 2)
   mit der Maßgabe, dass
   - M und Q zueinander im molaren Verhältnis 0 ≤ M/Q < 20, bevorzugt 0 ≤ M/Q ≤ 12, besonders bevorzugt 0 ≤ M/Q ≤ 7 und ganz besonders bevorzugt im Verhältnis 0 ≤ M/Q ≤ 4 stehen,
   - im Gemisch der Verbindungen I bis IV durchschnittlich pro Silicium- bzw. Metallatom mindestens 2,4 Alkoxygruppen OR^{*}, OR^{**}, OR^{***} bzw. OR^{****}, besonders bevorzugt mindestens 2,5 Alkoxygruppen und ganz besonders bevorzugt mindestens 2,6 Alkoxygruppen enthalten sind und
   - im Falle, dass als Verbindung IV eine der genannten Metallverbindungen mitverwendet wird, im Gemisch der Verbindungen I bis IV das Atomverhältnis Metall/Si maximal 4 : 6, bevorzugt maximal 3 : 7 und besonders bevorzugt maximal 2 : 8 beträgt;
2) Beschichten der so behandelten und getrockneten Oberfläche mit der extrudierten Schmelze einer Polyamidformasse.

Erfindungsgemäß werden als zu beschichtende Metalloberfläche beispielsweise Aluminium, dessen Legierungen, Stahl, Messing oder Zink verwendet. Es kann sich in diesen Fällen beispielsweise um verzinkten Stahl oder um ein aluminiumbeschichtetes Metall handeln.

Der zu beschichtende Metallgegenstand ist bevorzugt ein Profil, beispielsweise ein Rohr, insbesondere ein Bauteil eines Automobils, etwa eine Kraftstoffleitung, eine Servolenkungsleitung, eine Wasserkühlleitung, eine Bremsleitung oder eine Klimaanlagenleitung. Das Rohr besteht hierbei vorzugsweise aus Aluminium oder einer Aluminiumlegierung.

Die aufzutragende Mischung enthält die Organosilanzusammensetzung, gerechnet als Trockensubstanz ihres Hydrolysats, in der Regel zu 0,05 bis 8 Gew.-%, bevorzugt zu 0,1 bis 6 Gew.-%, besonders bevorzugt zu 0,2 bis 5 Gew.-% und insbesondere zu 0,3 bis 4 Gew.-%, in einem geeigneten Lösemittel wie z.B. Wasser, einem Alkohol oder einer alkoholisch-wässrigen Mischung.

Unter der Trockensubstanz der Organosilanzusammensetzung wird definitionsgemäß der nach Lagerung einer definierten Menge des Hydrolysats (ca. 1 g) in einer Einwegschale für 1 h bei 125 °C im Trockenschrank verbleibende, feste Anteil verstanden. Zur gravimetrischen Analyse wird die Einwegschale nach Beendigung des Trockenvorganges 20 Minuten in einem Exsikkator auf Raumtemperatur abgekühlt und auf einer Analysenwaage auf 1 mg genau zurückgewogen.

Das eine funktionelle Gruppe tragende Alkoxysilan der allgemeinen Formel

A-Si(R¹)_{y}(OR*)_{3-y} I

kann beispielsweise aus folgenden Verbindungen ausgewählt werden:
3-Aminopropyl-trimethoxysilan, 3-Aminopropyl-triethoxysilan, 3-Pyrrolidinopropyltrimethoxysilan, N-Methyl-3-aminopropyl-trimethoxysilan, 3-Aminopropyl-methyldiethoxysilan, N-Aminoethyl-3-aminopropyl-trimethoxysilan, N-(Benzylaminoethyl)-3-aminopropyl-trimethoxysilan, p-Anilino-triethoxysilan, 4-Aminobutyl-methyl-di-ethoxysilan, (CH₃O)₃Si-C₃H₆-NH-C₂H₄-NH-C₂H₄-NH₂, 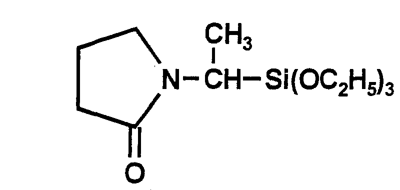
3-Glycidyloxypropyl-trimethoxysilan, 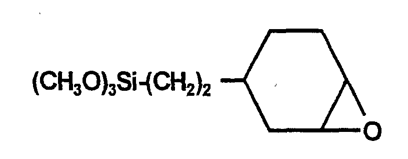
CH₂=C(CH₃)-COO-C₃H₆-Si(OCH₃)₃,
CH₂=CH-COO-C₃H₆-Si(OC₂H₅)₃, 3-Cyanopropyltrimethoxysilan, 3-Cyanopropyltriethoxysilan, 3-Isocyanatopropyltriethoxysilan, Ureidopropyltrimethoxysilan, 3-Thiocyanatopropyltrimethoxysilan, 3-Mercaptopropyltrimethoxysilan, 3-Mercaptopropyltriethoxysilan, 3-Mercaptopropylmethyldimethoxysilan, 4-Mercaptobutyltrimethoxysilan, 6-Mercaptohexyltrimethoxysilan, 3-Chloropropyl-trimethoxysilan und (C₂H₅O)₃Si(CH₂)₃-S₄-(CH₂)₃ Si(OC₂H₅)₃.

### Als Trialkoxysilan der allgemeinen Formel

R²-Si(OR**)₃ II

sind beispielsweise folgende Verbindungen geeignet:
Methyltrimethoxysilan, Methyltriethoxysilan, Ethyltrimethoxysilan, Ethyltriethoxysilan, n-Propyltriethoxysilan, n-Butyltrimethoxysilan, i-Butyltrimethoxysilan, Octyltriethoxysilan, Hexadecyltrimethoxysilan, Stearyltrimethoxysilan, Cyclohexyltrimethoxysilan, Cyclohexenylethyltriethoxysilan, Phenyltrimethoxysilan, Phenyltriethoxysilan, Vinyltrimethoxysilan, Vinyltriethoxysilan, Vinyl-tris(2-methoxyethoxy)silan, Allyltrimethoxysilan, Allyltriethoxysilan, CF₃CH₂CH₂-Si(OCH₃)₃, CF₃CH₂CH₂-Si(OC₂H₅)₃, C₂F₅CH₂CH₂-Si(OCH₃)₃, C₄F₉CH₂CH₂-Si(OCH₃)₃, n-C₆F₁₃CH₂CH₂-Si(OC₂H₅)₃, n-C₈F₁₇CH₂CH₂-Si(OCH3)3 und n-C₁₀F₂₁CH₂CH₂-Si(OCH₃)₃.

### Geeignete Dialkoxysilane der allgemeinen Formel

R³R⁴Si(OR***)₂ III

sind beispielsweise Dimethyldimethoxysilan, Dimethyldiethoxysilan, Diethyldimethoxysilan, Methyl-i-butyl-diethoxysilan, Cyclohexylmethyldimethoxysilan, Diphenyldimethoxysilan, Diphenyldiethoxysilan, Methylphenyldimethoxysilan und CF₃CH₂CH₂Si(CH₃)(OCH₃)₂.

### Geeignete Alkoxyverbindungen der allgemeinen Formel

Me(OR****)ₙ IV

sind beispielsweise Tetramethoxysilan, Tetraethoxysilan, Tetra(n-propoxy)silan, Tetra(n-butoxy)silan, Tetra(sek.-butoxy)silan, Tetra(i-butoxy)silan, Tetramethoxytitan, Tetraethoxytitan, Tetra(n-propoxy)titan, Tetra(i-propoxy)titan, Tetra(n-butoxy)titan, Tetra(i-butoxy)titan, Tetra(2-ethyl-hexoxy)titan, Tetramethoxyzirkonium, Tetraethoxyzirkonium, Tetra(n-propoxy)zirkonium, Tetra(i-propoxy)zirkonium, Tetra(n-butoxy)zirkonium, Tetra(sek.-butoxy)zirkonium, Tetra(i-butoxy)zirkonium, Tetra(2-ethylhexoxy)zirkonium, Trimethoxyaluminium, Triethoxyaluminium, Tri(n-propoxy)aluminium, Tri(i-propoxy)aluminium, Tri(n-butoxy)aluminium, Tri(i-butoxy)aluminium, Tri(sek-butoxy)aluminium, Tri(2-ethylhexoxy)aluminium, Diethoxyzink, Di(sek.-butoxy)zink und Di(2-ethylhexoxy)zink.

In einer bevorzugten Ausführungsform basiert die Organosilanzusammensetzung auf Silanen der Formel I, die eine Epoxy- oder Aminogruppe tragen, insbesondere auf 3-Glycidyloxypropyl-trimethoxysilan oder 3-Aminopropyltriethoxysilan.

Bei der Herstellung der Organosilanzusammensetzung werden vorzugsweise die Alkoxyverbindungen zu Hydroxyverbindungen hydrolysiert. Grundsätzlich wäre denkbar, hierfür auch andere Vorläuferverbindungen einzusetzen wie beispielsweise Halogenide oder Acetate. Bei der Hydrolyse entstehende starke Säuren können beim erfindungsgemäßen Verfahren jedoch Probleme aufwerfen, während hierbei entstehende schwache, flüchtige Säuren wie Essigsäure eher toleriert werden können.

Davon abgesehen ist aber der Einsatz entsprechender Vorläuferverbindungen dem erfindungsgemäßen Verfahren äquivalent und soll mit umfasst sein.

In einer möglichen Ausführungsform liegt die Organosilanzusammensetzung als Hydrolysat vor, bei dem ausgehend von den Verbindungen I bis IV neben der Hydrolyse auch eine Oligomerisierung bzw. Polykondensation stattgefunden hat.

Solche organopolysiloxanhaltigen Zusammensetzungen können nach verschiedenen Verfahren hergestellt werden.

So kann die organopolysiloxanhaltige Zusammensetzung aus den Monomeren der Formeln I bis IV durch Mischen der Zusammensetzung mit Wasser und Stehenlassen bei Raumtemperatur über mindestens 3 Stunden hergestellt werden. Hierbei sollten pro Mol der eingesetzten Verbindungen I bis IV mindestens 0,5 Mol und bevorzugt mindestens 1 Mol Wasser verwendet werden. Man kann auch von vornherein die gesamte Wassermenge, die in der anwendungsfertigen Mischung enthalten ist, zusetzen. Während der Reifezeit findet eine Vorkondensation zu oligomeren Strukturen statt.

In einer bevorzugten Ausführungsform lässt man die Mischung der Organosilanzusammensetzung mit Wasser mindestens 4 Stunden und besonders bevorzugt mindestens 6 Stunden bei Raumtemperatur (ca. 20 °C) stehen.

Bei höheren oder tieferen Temperaturen muss die Reifezeit entsprechend angepasst werden. Hierbei kann man sich der Faustregel bedienen, dass eine Temperaturerhöhung um 10 °C in etwa eine Verdoppelung der Reaktionsgeschwindigkeit mit sich bringt.

Die organopolysiloxanhaltige Zusammensetzung kann aber auch hergestellt werden durch Versetzen der Zusammensetzung gemäß den allgemeinen Formeln I bis IV mit 0,5 bis 30 Molen Wasser pro Mol der eingesetzten Verbindungen und Entfernen des bei der Umsetzung entstandenen Alkohols durch Destillation. Geeignete Verfahren sowie einige der bei der Reaktion entstehenden oligomeren Strukturen sind in der DE-OS 44 43 824 und der DE-OS 44 43 825 offenbart, auf die hier ausdrücklich Bezug genommen wird.

Gegebenenfalls, insbesondere dann, wenn eine der eingesetzten Verbindungen I bis IV stark unpolar ist oder wenn ein Metallalkoxid als Verbindung IV eingesetzt wird, kann die Hydrolyse anfangs in einem organischen Lösungsmittel vorgenommen werden, das mit Wasser zumindest teilweise mischbar ist, beispielsweise in Methanol, Ethanol, Isopropanol, Butanol, Dimethoxyethan, Tetrahydrofuran oder Aceton. Werden Metallalkoxide zusammen mit Silanen eingesetzt, so kann es darüber hinaus von Vorteil sein, zunächst die Silane mit weniger Wasser zu hydrolysieren, dann das Metallalkoxid zuzumischen und schließlich nach Einstellen des Gleichgewichtszustands die Hydrolyse und Weiterkondensation durch Zugabe der restlichen Wassermenge zu Ende zu führen.

Die entstandene Zusammensetzung kann homogen oder kolloidal sein. Auch eine Emulsion kann erfindungsgemäß verwendet werden, sofern diese stabil ist. Die einzige Grundvoraussetzung, die erfüllt sein muss, ist die, dass während der Gebrauchsdauer keine Ausfällungen entstehen.

Die auf die Metalloberfläche aufzutragende Mischung, die eine Organosilanzusammensetzung enthält, besteht im Regelfall aus einer wässrigen Basis. Sie kann beispielsweise durch Herunterverdünnen der Organosilanzusammensetzung hergestellt werden. Neben dieser kann sie noch Hilfsstoffe enthalten wie beispielsweise Verlaufshilfsmittel oder Substanzen, die die Metalloberfläche hydrophobieren, ohne die Haftung zum Polyamid zu verschlechtern.

Die Mischung kann auf die Metalloberfläche nach allen Methoden des Standes der Technik aufgebracht werden, beispielsweise durch Sprühen, Tauchen, Aufrollen oder Aufstreichen. Die Metalloberfläche kann sich hierbei auf Raumtemperatur befinden oder auch auf Temperaturen bis maximal etwa 280 °C aufgeheizt sein. Ein zumindest leichtes Heizen ist vorteilhaft, um die Oberfläche vor der anschließenden Extrusionsbeschichtung zu trocknen.

Beim Beschichten mit der Polyamidformmasse beträgt die Temperatur der Metalloberfläche üblicherweise 10 bis 300 °C, bevorzugt 100 bis 280 °C und besonders bevorzugt 200 bis 250 °C.

Das Verfahren der Extrusionsbeschichtung ist Stand der Technik. Bezüglich Einzelheiten sei beispielsweise verwiesen auf F. Hensen, W. Knappe, H. Potente (Hrsg.), Handbuch der Kunststoff-Extrusionstechnik, Band II, Hanser Verlag München Wien 1986, Seiten 321 bis 353.

Für die Extrusionsbeschichtung kann jedes bekannte, als Schmelze verarbeitbare Polyamid verwendet werden.

Hierbei kommen in erster Linie aliphatische Homo- und Copolykondensate in Frage, beispielsweise PA 46, PA 66, PA 68, PA 612, PA 88, PA 810, PA 1010, PA 1012, PA 1212, PA 6, PA 7, PA 8, PA 9, PA 10, PA 11 und PA 12. (Die Kennzeichnung der Polyamide entspricht internationaler Norm, wobei die erste (n) Ziffer(n) die C-Atomzahl des Ausgangsdiamins und die letzte (n) Ziffer(n) die C-Atomzahl der Dicarbonsäure angeben. Wird nur eine Zahl genannt, so bedeutet dies, dass von einer α,ω-Aminocarbonsäure bzw. von dem davon abgeleiteten Lactam ausgegangen worden ist; im übrigen sei verwiesen auf H. Domininghaus, Die Kunststoffe und ihre Eigenschaften, Seiten 272 ff., VDI-Verlag, 1976.)

Sofern Copolyamide verwendet werden, können diese z.B. Adipinsäure, Sebacinsäure, Korksäure, Isophthalsäure, Terephthalsäure, Naphthalin-2.6-dicarbonsäure, 2.2.4- bzw. 2.4.4-Trimethyladipinsäure, Azelainsäure, 1.12-Dodecandicarbonsäure, Cyclohexan-1.4-dicarbonsäure usw. als Cosäure bzw. Hexamethylendiamin, 2-Methyl-1.5-diaminopentan, 2.2.4- bzw. 2.4.4-Trimethylhexamethylendiamin, 1,9-Nonamethylendiamin, 1.10-Decamethylendiamin, 1.12-Dodecamethylendiamin, 4.4'-Diaminodicyclohexylmethan, 3.3'-Dimethyl-4.4'-diaminodicyclohexylmethan, 3-Aminomethyl-3.5.5-trimethylcyclohexylamin oder ähnliches als Codiamin enthalten. Lactame wie Caprolactam oder Laurinlactam bzw. Aminocarbonsäuren wie ω-Aminoundecansäure können als Cokomponente ebenfalls eingebaut sein.

Die Herstellung dieser Polyamide ist bekannt (z. B. D. B. Jacobs, J. Zimmermann, Polymerization Processes, S. 424- 467, Interscience Publishers, New York, 1977; DE-AS 21 52 194).

Darüber hinaus sind als Polyamide auch gemischte aliphatisch/aromatische Polykondensate geeignet, wie sie z. B. in den US-PSS 2 071 250, 2 071 251, 2 130 523, 2 130 948, 2 241 322, 2 312 966, 2 512 606 und 3 393 210 sowie in Kirk-Othmer, Encyclopedia of Chemical Technology, 3. Aufl., Vol. 18, Seiten 328 ff. und 435 ff., Wiley & Sons, 1982, beschrieben werden. Weitere geeignete Polyamide sind Poly(etheresteramide) bzw. Poly(etheramide); derartige Produkte werden z. B. in den DE-OSS 25 23 991, 27 12 987 und 30 06 961 beschrieben.

Auch transparente Polyamide können für die Beschichtung verwendet werden. Derartige Polyamide sind beispielsweise in folgenden Schriften beschrieben: US-A-2 742 496, CH-B-480 381, CH-B-679 861, DE-A-22 25 938, DE-A-26 42 244, DE-A-27 43 515, DE-A-29 36 759, DE-A-27 32 928, DE-A-43 10 970, EP-A-0 053 876, EP-A-0 271 308, EP-A-0 313 436, EP-A-0 725 100 und EP-A-0 725 101.

Die Polyamidformmasse kann entweder eines dieser Polyamide oder mehrere als Gemisch enthalten.

Gute Ergebnisse werden erzielt, wenn in der Polyamidformmasse ein Überschuss an Carboxylendgruppen vorliegt. Jedoch werden die Ergebnisse auf hohem Niveau nochmal verbessert, wenn die Polyamidformmasse einen Überschuss an Aminoendgruppen aufweist, weshalb diese Ausführungsform bevorzugt ist.

Zusätzlich können der Formmasse die für Polyamide üblichen Hilfs- und Zusatzstoffe wie z.B. Flammschutzmittel, Stabilisatoren, Weichmacher, Verarbeitungshilfsmittel, Pigmente oder ähnliches zugefügt werden. Die Menge der genannten Mittel ist so zu dosieren, dass die gewünschten Eigenschaften nicht ernsthaft beeinträchtigt werden.

Es hat sich herausgestellt, dass die Haftung zur behandelten Metalloberfläche noch weiter verbessert werden kann, wenn die Polyamidformmasse weitere Zusätze enthält, die ausgewählt sind aus:
- Oxazolinen wie z.B. 2-Ethyl-2-oxazolin, 2-Phenyl-2-oxazolin, 2-Isopropenyl-2-oxazolin, 2-Ethyl-4-methyl-2-oxazolin, 2-Phenyl-4-ethyl-2-oxazolin, 2-Phenyl-4-methyl-2-oxazolin. Die Oxazoline können alleine oder als Mischung eingesetzt werden. Bezogen auf die Polyamidformmasse werden 0,05 bis 10 Gew.-% und bevorzugt 0,1 bis 5 Gew.-% verwendet.
- Bisoxazolinen wie z.B. 2.2'-Methylen-bis(2-oxazolin), 2.2'-Ethylen-bis(2-oxazolin), 2.2'-Ethylen-bis(4-methyl-2-oxazolin), 2.2'-Propylen-bis(2-oxazolin), 2.2'-Tetramethylen-bis(2-oxazolin), 2.2'-Hexamethylen-bis(2-oxazolin), 2.2'-Octa-methylen-bis(2-oxazolin), 2.2'-p-Phenylen-bis(2-oxazolin), 2.2'-m-Phenylen-bis(2-oxazolin), 2.2'-o-Phenylen-bis(2-oxazolin), 2.2'-p-Phenylen-bis(4-methyl-2-oxa-zolin), 2.2'-m-Phenylen-bis(4-methyl-2-oxazolin), 2.2'-o-Phenylen-bis(4-methyl-2-oxazolin), 2.2'-p-Phenylen-bis(4-phenyl-2-oxazolin), 2.2'-m-Phenylen-bis(4-phenyl-2-oxazolin), 2.2'-o-Phenylen-bis(4-phenyl-2-oxazolin), 2.2'-Bis(2-oxa-zolin), 2.2'-Bis(4-methyl-2-oxazolin), 2.2'-Bis(4-ethyl-2-oxazolin), 2.2'-Bis(4-phenyl-2-oxazolin). Diese Bisoxazoline können alleine oder als Mischung eingesetzt werden. Bezogen auf die Polyamidformmasse werden 0,05 bis 10 Gew.-% und bevorzugt 0,1 bis 5 Gew.-% verwendet.
- Polyoxazoline, die durch kationische ringöffnende Polymerisation von Oxazolinen, z.B. der oben genannten Verbindungen, hergestellt werden können. Bezogen auf die Polyamidformmasse können 0,05 bis 10 Gew.-% und bevorzugt 0,1 bis 5 Gew.-% eingesetzt werden.
- Bifunktionelle Epoxide wie z.B. Bisphenoldiglycidylether oder ein Epoxidharz mit einer Epoxidfunktionalität von mindestens 2. Eine Vielzahl entsprechender Verbindungen ist kommerziell erhältlich. Auch hier werden, bezogen auf die Polyamidformmasse, 0,05 bis 10 Gew.-% und bevorzugt 0,1 bis 5 Gew.-% eingesetzt.
- Haftharze auf Basis von Acetophenon-Formaldehyd-Harzen oder Cyclohexanon-Formaldehyd-Harzen. Auch hier ist eine Vielzahl entsprechender Verbindungen kommerziell erhältlich. Die eingesetzten Mengen, bezogen auf die Polyamidformmasse, bewegen sich ebenfalls im Bereich von 0,05 bis 10 Gew.-% und bevorzugt von 0,1 bis 5 Gew.-%.

Diese Zusätze sind hinsichtlich Haftungsverbesserung besonders effizient, wenn das verwendete Polyamid einen Überschuss an Aminoendgruppen aufweist.

Obwohl es bevorzugt ist, beim erfindungsgemäßen Verfahren auf die Chromatierung zu verzichten, kann in einer weiteren Ausführungsform auch eine chromatierte Aluminiumoberfläche mit Hilfe des erfindungsgemäßen Verfahrens beschichtet werden. Darüber hinaus kann die Metalloberfläche vor der Behandlung mit der Organosilanzusammensetzung auch auf jede andere bekannte Weise vorbehandelt werden, wie beispielsweise in der US-PS 5 520 223 beschrieben. Auf diese Weise wird ein besonders wirksamer Korrosionsschutz erzielt, verbunden mit einer besonders guten Haftung des Polyamids.

Der Metallgegenstand wird im allgemeinen nach der Extrusionsbeschichtung zügig abgekühlt, was beispielsweise mittels eines kalten Luft- oder Stickstoffstroms, eines Wasserbads oder durch Besprühen mit Wasser geschehen kann, um möglichst schnell eine für die weitere Handhabung unerläßliche klebfreie Oberfläche zu erhalten. In der Regel befindet sich der Metallgegenstand, gerechnet ab dem Zeitpunkt des Schmelzeauftrags, dabei maximal 30 Sekunden, bevorzugt maximal 20 Sekunden, besonders bevorzugt maximal 12 Sekunden, insbesondere bevorzugt maximal 8 Sekunden und ganz besonders bevorzugt maximal 5 Sekunden auf einer Temperatur oberhalb des Kristallitschmelzpunkts Tₘ bei kristallinen Formmassen bzw. oberhalb von T_{g}+30 °C bei amorphen Formmassen. Tₘ sowie der Glasübergangspunkt T_{g} werden mittels der DSC-Methode beim Aufnehmen der zweiten Aufheizkurve bestimmt. Diese Methode ist dem Fachmann geläufig und braucht daher nicht weiter erläutert zu werden.

Auf die Polyamidschicht können bei Bedarf noch eine oder mehrere weitere Polymerschichten aufgetragen werden. Dies kann durch Coextrusion geschehen oder auch durch eine nachträgliche Extrusionsbeschichtung, wobei gegebenenfalls ein Haftvermittler zusätzlich aufgetragen werden kann. Geeignete Polymere sind z.B. thermoplastische Elastomere, Ionomere aus Ethylen-Methacrylsäure-Copolymeren, Fluorpolymere wie beispielsweise Fluorkautschuke, andere Kautschuke, die mit Säure- oder Säureanhydridgruppen fünktionalisiert sein können und darüber hinaus Füllstoffe, Weichmacher sowie ein Vulkanisationssystem enthalten können, oder maleinsäureanhydridmodifizierte Ethylenpoly- bzw. -copolymere. Geeignete Polymere sind in der US-PS 5 520 223 näher beschrieben. Mit derartigen Schichten kann das Rohr etwa vor mechanischen Einwirkungen wie z.B. Steinschlag besser geschützt werden.

Mit dem erfindungsgemäßen Verfahren werden Metallgegenstände erhalten, die mit einem wirksamen und dauerhaften Korrosionsschutz versehen sind. Sie finden Anwendung insbesondere im Automobilbau und im Maschinenbau.

## Patentansprüche

1. Extrusionsbeschichtetes Metallprofil, hergestellt durch
- Auftragen einer Mischung, die eine Organosilanzusammensetzung enthält, welche hergestellt ist aus
a) Q Molen eine funktionelle Gruppe tragender Alkoxysilane der allgemeinen Formel
A-Si(R¹)_{y}(OR*)_{3-y} I
und
b) M Molen Alkoxysilane, ausgewählt aus
α) Trialkoxysilanen der allgemeinen Formel
R²-Si(OR**)₃ II
und/oder
β) Dialkoxysilanen der allgemeinen Formel
R³R⁴Si(OR***)₂ III
und/oder
γ) Alkoxyverbindungen der allgemeinen Formel
Me(OR****)ₙ, IV
wobei A einen Substituenten bedeutet, der mindestens eine direkt oder über einen aliphatischen oder aromatischen Kohlenwasserstoffrest mit Silicium verbundene Amino-, Alkylamino-, Dialkylamino-, Amido-, Epoxy-, Acryloxy-, Methacryloxy-, Cyano-, Isocyanato-, Ureido-, Thiocyanato-, Mercapto-, Sulfan- oder Halogengruppe besitzt,
R¹ = Methyl, Ethyl oder A (wie vorstehend definiert),
y= 0 oder 1,
R^{*}, R^{**}, R^{***} und R^{****} sind unabhängig voneinander eine Alkylgruppe mit 1 bis 8 C-Atomen oder eine entsprechende Alkylgruppe, die mit einem Alkyl[(poly)ethylenglykol]-Rest substituiert ist,
R², R³ und R⁴ sind unabhängig voneinander eine Alkyl-, Alkenyl-, Alkinyl-, Cycloalkyl-, Cycloalkenyl- oder aromatische Gruppe mit jeweils maximal 18 C-Atomen oder eine derartige Gruppe, die teil- oder perfluoriert und/oder mit Alkyloxy- und/oder mit Aryloxygruppen substituiert ist,
Me ist ausgewählt aus Si (n gleich 4) oder einem Metall wie Ti (n gleich 4), Zr (n gleich 4), Al (n gleich 3) und Zn (n gleich 2)
mit der Maßgabe, dass
- M und Q zueinander im molaren Verhältnis 0 < M/Q ≤ 20 stehen,
- im Gemisch der Verbindungen I bis IV durchschnittlich pro Silicium-bzw. Metallatom mindestens 2,4 Alkoxygruppen OR*, OR**, OR*** bzw. OR**** enthalten sind und
- im Falle, dass als Verbindung IV eine der genannten Metallverbindungen mitverwendet wird, im Gemisch der Verbindungen I bis IV das Atomverhältnis Metall/Si maximal 4 : 6 beträgt;
- Beschichten der so behandelten und getrockneten Oberfläche mit der extrudierten Schmelze einer Polyamidformasse.

2. Extrusionsbeschichtetes Metallprofil gemäß Anspruch 1,
**dadurch gekennzeichnet**,
dass es ein Rohr ist.

3. Extrusionsbeschichtetes Metallprofil gemäß Anspruch 2,
**dadurch gekennzeichnet**,
dass es ein Bauteil eines Automobils ist.

4. Extrusionsbeschichtetes Metallprofil gemäß Anspruch 3,
**dadurch gekennzeichnet**,
dass es eine Kraftstoffleitung, eine Servolenkungsleitung, eine Wasserkühlleitung, eine Bremsleitung oder eine Klimaanlagenleitung ist.

5. Extrusionsbeschichtetes Metallprofil gemäß einem der vorhergehenden Ansprüche,
**dadurch gekennzeichnet**,
dass die Oberfläche aus Aluminium, einer Aluminiumlegierung, chromatiertem Aluminium, Stahl, Messing oder Zink besteht.

6. Extrusionsbeschichtetes Metallprofil gemäß einem der vorhergehenden Ansprüche,
**dadurch gekennzeichnet**,
dass die Polyamidformmasse einen Überschuss an Aminoendgruppen aufweist.

7. Extrusionsbeschichtetes Metallprofil gemäß einem der vorhergehenden Ansprüche,
**dadurch gekennzeichnet**,
dass die Polyamidformmasse 0,05 bis 10 Gew.-% an Zusätzen enthält, die ausgewählt sind aus
- Oxazolinen,
- Bisoxazolinen,
- Polyoxazolinen, die durch kationische ringöffnende Polymerisation von Oxazolinen hergestellt werden,
- bifunktionellen Epoxiden bzw. Epoxidharzen mit einer Epoxidfunktionalität von mindestens 2 sowie
- Haftharzen auf Basis von Acetophenon-Formaldehyd-Harzen oder Cyclohexanon-Formaldehyd-Harzen.

8. Extrusionsbeschichtetes Metallprofil gemäß einem der vorhergehenden Ansprüche,
**dadurch gekennzeichnet**,
dass es sich ab dem Zeitpunkt des Schmelzeauftrags maximal 30 Sekunden auf einer Temperatur oberhalb von Tₘ bei einer kristallinen Formmasse bzw. oberhalb von T_{g}+30 °C bei einer amorphen Formmasse befunden hat.

9. Extrusionsbeschichtetes Metallprofil gemäß einem der vorhergehenden Ansprüche,
**dadurch gekennzeichnet**,
dass auf der Polyamidschicht noch eine oder mehrere weitere Polymerschichten aufgetragen sind.

10. Verfahren zur Herstellung eines extrusionsbeschichteten Metallgegenstands, gekennzeichnet durch folgende Schritte:
- Auftragen einer Mischung, die eine Organosilanzusammensetzung enthält, welche hergestellt ist aus
a) Q Molen eine funktionelle Gruppe tragender Alkoxysilane der allgemeinen Formel
A-Si(R¹)_{y}(OR*)_{3-y} I
und
b) M Molen Alkoxysilane, ausgewählt aus
α) Trialkoxysilanen der allgemeinen Formel
R²-Si(OR**)₃ II
und/oder
ß) Dialkoxysilanen der allgemeinen Formel
R³R⁴Si(OR***)₂ III
und/oder
γ) Alkoxyverbindungen der allgemeinen Formel
Me(OR****)ₙ, IV
wobei A einen Substituenten bedeutet, der mindestens eine direkt oder über einen aliphatischen oder aromatischen Kohlenwasserstoffrest mit Silicium verbundene Amino-, Alkylamino-, Dialkylamino-, Amido-, Epoxy-, Acryloxy-, Methacryloxy-, Cyano-, Isocyanato-, Ureido-, Thiocyanato-, Mercapto-, Sulfan- oder Halogengruppe besitzt,
R¹ = Methyl, Ethyl oder A (wie vorstehend definiert),
y= 0 oder 1,
R^{*}, R^{**}, R^{***} und R^{****} sind unabhängig voneinander eine Alkylgruppe mit 1 bis 8 C-Atomen oder eine entsprechende Alkylgruppe, die mit einem Alkyl[(poly)ethylenglykol]-Rest substituiert ist,
R², R³ und R⁴ sind unabhängig voneinander eine Alkyl-, Alkenyl-, Alkinyl-, Cycloalkyl-, Cycloalkenyl- oder aromatische Gruppe mit jeweils maximal 18 C-Atomen oder eine derartige Gruppe, die teil- oder perfluoriert und/oder mit Alkyloxy- und/oder mit Aryloxygruppen substituiert ist,
Me ist ausgewählt aus Si (n gleich 4) oder einem Metall wie Ti (n gleich 4), Zr (n gleich 4), Al (n gleich 3) und Zn (n gleich 2) mit der Maßgabe, dass
- M und Q zueinander im molaren Verhältnis 0 ≤ M/Q ≤ 20 stehen,
- im Gemisch der Verbindungen I bis IV durchschnittlich pro Silicium-bzw. Metallatom mindestens 2,4 Alkoxygruppen OR^{*}, OR^{**}, OR^{***} bzw. OR^{****} enthalten sind und
- im Falle, dass als Verbindung IV eine der genannten Metallverbindungen mitverwendet wird, im Gemisch der Verbindungen I bis IV das Atomverhältnis Metall/Si maximal 4 : 6 beträgt;
- Beschichten der so behandelten und getrockneten Oberfläche mit der extrudierten Schmelze einer Polyamidformasse.

11. Verfahren gemäß Anspruch 10,
**dadurch gekennzeichnet**,
dass der Metallgegenstand ein Profil ist.

12. Verfahren gemäß Anspruch 11,
**dadurch gekennzeichnet**,
dass der Metallgegenstand ein Rohr ist.

13. Verfahren gemäß Anspruch 12,
**dadurch gekennzeichnet**,
dass der Metallgegenstand ein Bauteil eines Automobils ist.

14. Verfahren gemäß Anspruch 13,
**dadurch gekennzeichnet**,
dass der Metallgegenstand eine Kraftstoffleitung, eine Servolenkungsleitung, eine Wasserkühlleitung, eine Bremsleitung oder eine Klimaanlagenleitung ist.

15. Verfahren gemäß einem der Ansprüche 10 bis 14,
**dadurch gekennzeichnet**,
dass die Oberfläche des Metallgegenstands aus Aluminium, einer Aluminiumlegierung, chromatiertem Aluminium, Stahl, Messing oder Zink besteht.

16. Verfahren gemäß einem der Ansprüche 10 bis 15,
**dadurch gekennzeichnet**,
dass die Polyamidformmasse einen Überschuss an Aminoendgruppen aufweist.

17. Verfahren gemäß einem der Ansprüche 10 bis 16,
**dadurch gekennzeichnet**,
dass die Polyamidformmasse 0,05 bis 10 Gew.-% Zusätze enthält, die ausgewählt sind aus
- Oxazolinen,
- Bisoxazolinen,
- Polyoxazolinen, die durch kationische ringöffnende Polymerisation von Oxazolinen hergestellt werden,
- bifunktionellen Epoxiden bzw. Epoxidharzen mit einer Epoxidfunktionalität von mindestens 2 sowie
- Haftharzen auf Basis von Acetophenon-Formaldehyd-Harzen oder Cyclohexanon-Formaldehyd-Harzen.

18. Verfahren gemäß einem der Ansprüche 10 bis 17,
**dadurch gekennzeichnet**,
das die aufzutragende Mischung die Organosilanzusammensetzung, gerechnet als Trockensubstanz ihres Hydrolysats, zu 0,05 bis 8 Gew.-% enthält.

19. Verfahren gemäß einem der Ansprüche 10 bis 18,
**dadurch gekennzeichnet**,
dass die Organosilanzusammensetzung organopolysiloxanhaltig ist.

20. Verfahren gemäß einem der Ansprüche 10 bis 19,
**dadurch gekennzeichnet**,
dass sich der Metallgegenstand ab dem Zeitpunkt des Schmelzeauftrags maximal 30 Sekunden auf einer Temperatur oberhalb von Tₘ bei einer kristallinen Formmasse bzw. oberhalb von T_{g}+30 °C bei einer amorphen Formmasse befindet.

21. Verfahren gemäß einem der Ansprüche 10 bis 20,
**dadurch gekennzeichnet**,
dass auf die Polyamidschicht noch eine oder mehrere weitere Polymerschichten aufgetragen werden.

22. Verwendung des extrusionsbeschichteten Metallprofils gemäß einem der Ansprüche 1 bis 9 bzw. des gemäß einem der Ansprüche 10 bis 21 hergestellten extrusionsbeschichteten Metallgegenstands im Automobilbau oder im Maschinenbau.
